# EUROPEAN PATENT SPECIFICATION

(11) **EP 0 406 999 B1**
(45) Date of publication and mention of the grant of the patent: **30.11.1994**
(21) Application number: 90303426.2
(22) Date of filing: 30.03.1990
(51) Int. Cl.: C02F 1/52, C02F 1/54

(54) **Method of treating low-concentration turbid water**
Verfahren für die Aufbereitung von leicht trübem Wasser
Procédé pour le traitement d'eau légèrement trouble

(30) Priority: 03.07.1989 JP 172711/89
(43) Date of publication of application: 09.01.1991
(73) Proprietor: AOKI CORPORATION, Osaka (JP)
(72) Inventor: Toshiyuki, Miki, Segamihara-shi, Kanagawa (JP); Tono, Show, Tokyo (JP); Kozu, Kazunori, Tokyo (JP); Hayashi, Shintaro, Kasukaba-city, Saitama (JP)
(74) Representative: Watkins, Arnold Jack

(56) References cited:
- EP-A- 0 019 175
- EP-A- 0 346 159
- FR-A- 1 318 730
- GB-A- 967 607
- GB-A- 2 082 163
- W.L.K.SCHWOYER: "Polyelectrolytes for water and wastewater treatment" 1986, CRCPRESS,Inc., Boca Raton,Fla.,US
- Joint Committee: "Wastewater Treatment Plant Design" 1977, Water PollutionControl Federation, Washington, D.C. US

## Description

The present invention relates to a method of treating low-concentration turbid water, and more particularly to a new method which allows low-concentration turbid water to be treated to form flock which can then be removed through settlement, which treatment has hitherto been impossible.

Along with the increasing public interest in pollution control, improvements have been made in the treatment technology of turbid water of rivers and lakes and are achieving remarkable results.

In the treatment of turbid water, it is the usual practice to first add a coagulant such as cationic inorganic substance, and then add an anionic coagulant, thereby causing settlement and separation of turbidity components.

In spite of such progress made in turbid water treatment, however, there still remains a problem which cannot be solved in rivers, lakes and construction sites. It is the impossibility of cleaning low-concentration turbid water.

In the conventional treatment technology of turbid water, it is possible to treat turbid water having a concentration of at least 30,000 ppm to reduce the concentration to a turbidity of about 3,500 to 2,000 ppm relatively easily. It is however practically impossible to clean low-concentration turbid water of up to 1,000 ppm down to below 10 ppm.

In order to clean such turbid water to a concentration of about 10 ppm, it is necessary to restore once settled turbidity components (SS) to the raw water level in a multi-stage settling process, increase the concentration of turbidity components of water for further settling treatment, and treat the resultant water through a filtering tank or the like, and this complicated and troublesome process requires much cost and labor. It is therefore practically impossible to adopt this process.

GB-967607 describes a process for removing suspended solids from aqueous suspensions in which cationic and anionic coagulants are added, the order of addition depending on the charge of the suspended solids, and gently stirred.

The present invention was developed in view of the circumstances described above and aims to overcome the defects in the conventional method of treating turbid water, and to provide a new treating method which permits cleaning of turbid water having a low concentration of up to 1,000 ppm, or even up to 100 pm at a high efficiency through a single run of treatment to a concentration below 10 ppm.

The present invention provides a method of treating turbid water, characterized by comprising the steps of: adding sequentially an anionic coagulant and an organic polymeric cationic coagulant to low-concentration turbid water, stirring the resultant mixture at a speed higher than 200 rpm, and causing formation of flock to be removed through settlement.

Furthermore, one of the preferred embodiments of the present invention is to continue further the sequential addition of coagulants.

Now, the method of the present invention is described in more detail. Low-concentration turbid water covered by the present invention has a concentration of up to 1,000 ppm. Cleaning of such low-concentration turbid water to a concentration below 10 ppm is very difficult by the conventional method. In treating such low-concentration turbid water by the method of the present invention, it is essential to add an anionic coagulant and then a cationic coagulant in this order and sufficiently stir the mixture.

Suitable anionic coagulants include a poly acrylamide polymer coagulant and other polymer coagulants. Such polymer coagulants include, for example, acrylamide-acrylic acid copolymers, partially sulfomethylated polyacrylamides and polyacrylamidopropane sulfates.

Similarly, a polymer coagulant may suitably be used as the cationic coagulant. Examples include polyaminoalkylmethacrylates and polyethyleneimines. Almost no desired effect is produced with PAC (polyaluminum chloride) or inorganic cationic coagulants such as iron chloride or iron sulfate.

The consumption of the coagulant may be selected appropriately depending upon the concentration of the turbid water to be cleaned from a wide range of consumption. The consumption does not form an important factor in the method of the present invention.

The addition of the anionic and the cationic coagulants should be made in this sequence, and as required the addition may further be continued in repetition.

Sufficient dispersion should be ensured through addition of these coagulants, and it is necessary here to adopt forced high-speed stirring. This may be stirring at a speed of about 400 rpm for about 5 to 30 seconds. This stirring enhances the contact between settling components in turbid water and coagulant particles.

In the present invention, low-concentration turbid water of even up to 100 ppm can be cleaned to below 10 ppm at a high efficiency in a single run of treatment by adding the anionic coagulant and the cationic coagulant in this order and forcedly stirring the mixture.

This has been absolutely impossible by the conventional method mainly based on treatment with a cationic coagulant.

According to the method of the present invention, it is possible to clean low-concentration turbid water having a concentration of flock-forming 55 components of up to 1,000 ppm, or even up to 100 ppm to drinking water level of under 10 ppm through a single run of treatment.

This allows treatment at a high efficiency and would permit remarkable progress of pollution control.

The present invention is now illustrated by the following Examples: -

### Examples

The method of the present invention was applied by the use of a jar tester. A 500-ml beaker was used and the mixture was stirred at a speed of 400 rpm for five to ten seconds.

Raw water used had a concentration as shown in Table 1: Examples 1 to 3 covered turbid water from construction sites, and Examples 4 to 6 covered turbid water from muddy rivers.

The resultant concentrations are under 10 ppm in all cases.

For comparison purposes, cases with low-speed (200 rpm) stirring are also shown in Table 1. There was observed only a limited effect of reducing the concentration. Table 2 shows examples using PAC: almost no concentration reducing effect was observed.

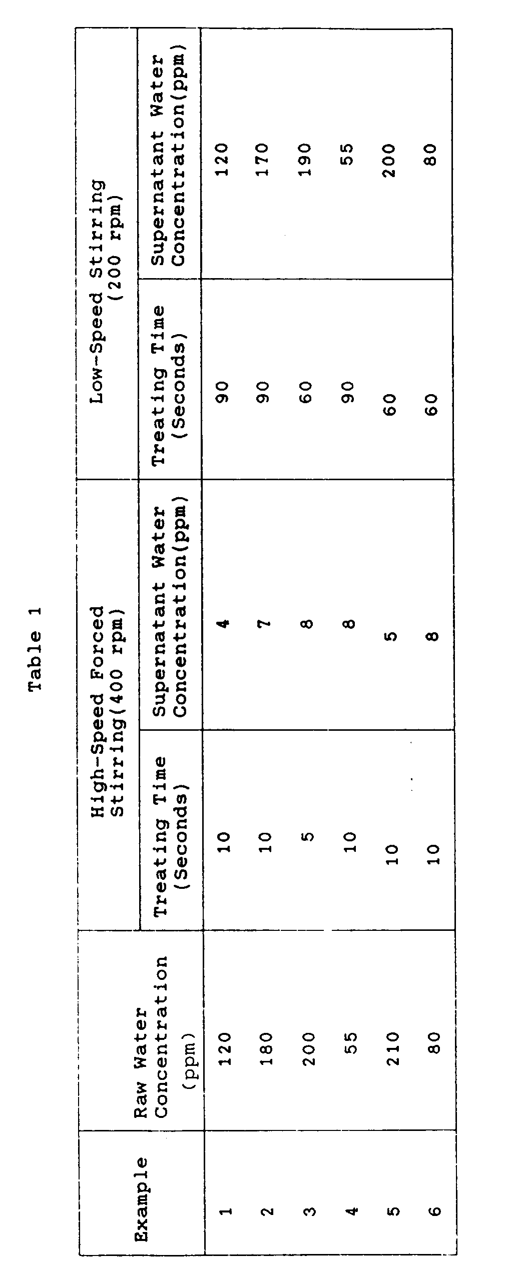

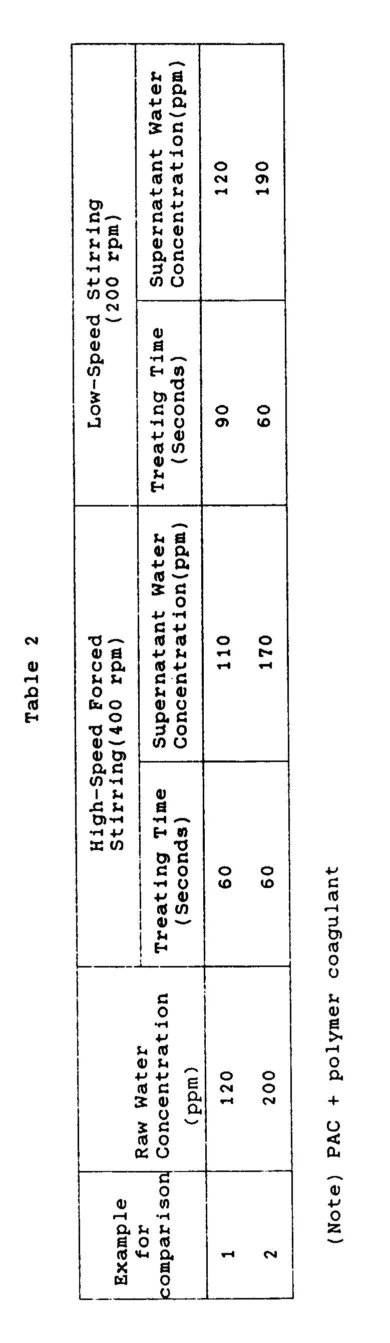

## Claims

1. A method of treating low-concentration turbid water, comprising the steps of: adding sequentially an anionic coagulant and an organic polymeric cationic coagulant to low-concentration turbid water, and stirring the resultant mixture at a speed higher than 200 rpm whereby flock which is removable by settlement is formed.

2. A method as claimed in claim 1, wherein further addition of coagulants is carried out sequentially.

3. A method as claimed in claim 1 or claim 2 wherein stirring is effected at a speed of at least 300 rpm.

4. A method as claimed in claim 3 wherein stirring is effected at a speed of from 300 to 600 rpm.

5. A method as claimed in any of the preceding claims wherein stirring is effected for a period of from 5 to 30 seconds.

6. A method as claimed in any of claims 1 to 5, wherein low-concentration turbid water having a concentration of up to SS 100 ppm is treated.

7. A method as claimed in any one of claims 1 to 6 wherein said anionic coagulant is a polymer coagulant.

## Patentansprüche

1. Verfahren zur Behandlung bzw. Aufbereitung von leicht trübem Wasser, umfassend die Schritte:
Aufeinanderfolgende Zugabe eines anionischen Koagulierungsmittels und eines organischen polymeren kationischen Koagulierungsmittels zu dem in niedriger Konzentration trüben Wasser, und Rühren des entstandenen Gemisches bei einer Geschwindigkeit höher als 200 U/min, wobei eine Flocke gebildet wird, welche durch Absetzen entfernbar ist.

2. Verfahren gemäß Anspruch 1, wobei eine weitere Zugabe von Koagulierungsmitteln aufeinanderfolgend durchgeführt wird.

3. Verfahren gemäß Anspruch 1 oder Anspruch 2, wobei das Rühren bei einer Geschwindigkeit von mindestens 300 U/min durchgeführt wird.

4. Verfahren gemäß Anspruch 3, wobei das Rühren bei einer Geschwindigkeit von 300 bis 600 U/min bewirkt wird.

5. Verfahren gemäß einem der vorhergehenden Ansprüche, wobei das Rühren während eines Zeitraum: von 5 bis 30 Sekunden durchgeführt wird.

6. Verfahren gemäß einem der Ansprüche 1 - 5, wobei ein leicht trübe: Wasser mit einer Konzentration von bis zu SS 100 ppm behandelt wird.

7. Verfahren gemäß einem der Ansprüche 1 bis 6, wobei das anionische Koagulierungsmittel ein polymeres Koagulierungsmittel ist.

## Revendications

1. Procédé de traitement d'eau légèrement trouble, comprenant l'étape qui consiste à ajouter séquentiellement un coagulant anionique et un coagulant cationique organique polymère à de l'eau trouble à basse concentration et à agiter le mélange obtenu à une vitesse supérieure à 200 tours/minute de manière à former un floc qui peut être éliminé par décantation.

2. Procédé suivant la revendication 1, qui consiste à effectuer séquentiellement une autre addition de coagulant.

3. Procédé suivant la revendication 1 ou 2, qui consiste à effectuer l'agitation à une vitesse d'au moins 300 tours/minute.

4. Procédé suivant la revendication 3, qui consiste à effectuer l'agitation à une vitesse de 300 à 600 tours/minute.

5. Procédé suivant l'une quelconque des revendications précédentes, qui consiste à effectuer l'agitation pendant une durée de 5 à 30 secondes.

6. Procédé suivant l'une quelconque des revendications 1 à 5, qui consiste à traiter de l'eau trouble légèrement trouble ayant une concentration allant jusqu'a 100 ppm de SS.

7. Procédé suivant l'une quelconque des revendications 1 à 6, dans lequel le coagulant anionique est un coagulant polymère.
